# EUROPEAN PATENT APPLICATION

(11) **EP 2 168 927 A1**
(43) Date of publication of application: **31.03.2010**
(21) Application number: 08778171.2
(22) Date of filing: 15.07.2008
(51) Int. Cl.: C03C 8/24

(54) **SEALING MATERIAL, SEALING TABLET, AND GLASS COMPOSITION FOR SEALING**

(30) Priority: 20.07.2007 JP 2007189290; 20.07.2007 JP 2007189455; 28.04.2008 JP 2008116550; 28.04.2008 JP 2008116597
(71) Applicant: Nippon Electric Glass Co., Ltd., Otsu-shi Shiga 520-8639 (JP)
(72) Inventor: ISHIHARA, Kentaro, Otsu-shi Shiga 520-8639 (JP)
(74) Representative: Tetzner, Michael
(86) International application number: PCT/JP2008/062750
(87) International publication number: WO 2009/014029

(57) **Abstract**

An outer tube (2) and a lamp base (5) are sealed to each other with a sealing material (4). A current supply member (3) is inserted through the lamp base (5), and is fixed to the lamp base (5) with the sealing material (4). An exhaust tube (6) is inserted through the lamp base (5), and is fixed to the lamp base (5) with the sealing material (4).
An electric discharge container is placed inside the outer tube (2). The sealing material (4) includes 35 to 75 vol% of a glass powder and 25 to 65 vol% of a refractory filler powder, and has a thermal expansion coefficient of less than 70×10⁻⁷/°C. The glass powder includes, as a glass composition, in terms of mass%, 55 to 85% of Bi₂O₃, 5 to 20% of B₂O₃, 1 to 15% of ZnO, and 0 to 7% of SiO₂.

## Description

### Technical Field

The present invention relates to a sealing material, a sealing tablet, and a glass composition for sealing, which are suitable for sealing a high intensity discharged lamp (HID lamp) or the like.

### Background Art

Conventionally, there has been used glass as a sealing material. The glass is excellent in chemical durability and heat resistance compared with a resin-based adhesive, and is also suitable in ensuring air-tightness reliability. Glass for sealing requires various properties such as mechanical strength, flowability, and electrical insulating properties depending on the applications. As glass satisfying those properties, there has been widely used lead borate-based glass containing a large amount of PbO (for example, refer to Patent Document 1).

However, there has recently been pointed out the environmental problems with respect to PbO contained in the lead borate-based glass, and it is desired that the lead borate-based glass be substituted with lead-free glass. Therefore, there have been developed various kinds of lead-free glass as replacement goods for the lead borate-based glass. Of those, the bismuth-based glass (Bi₂O₃-B₂O₃-based glass) described in Patent Document 2 is expected as an alternative of the lead borate-based glass, because the bismuth-based glass has various properties such as chemical resistance and mechanical strength which are about the same as those of the lead borate-based glass.
Patent Document 1: JP 05-17179 A
Patent Document 2: JP 06-24797 A

### Disclosure of the Invention

### Problem to be solved by the Invention

In recent years, a high intensity discharged lamp, in particular, a high pressure metal halide lamp has properties such as high efficiency, long lifetime, high power output, and high color rendering properties, and hence has been used as a headlight for a vehicle or an interior illumination lamp.

In general, the high pressure metal halide lamp includes a discharge container filled with metal halide, Hg, inert gas, and the like. Further, the high pressure metal halide lamp has an outer tube which surrounds the discharge container and blocks the discharge container from heat. The outer tube also prevents the discharge container from being broken and has a function of shielding hazardous UV rays. In addition, the outer tube is fixed to a lamp base, and to the lamp base, two current supply members (pins) are fixed. Further, the space between the outer tube and the discharge container is kept vacuum in order to block heat, and hence, an exhaust tube is provided to the lamp base for keeping the space under vacuum. In general, there are used low-expansion materials such as boron silicate glass and ceramics (thermal expansion coefficient of 40 to 60×10⁻⁷/°C) for the outer tube and the lamp base, and there is used a metal material such as kovar for the current supply member and the exhaust tube.

In order to keep the inside of the outer tube under vacuum, the outer tube and the lamp base need to be air-tightly sealed to each other. As methods of sealing the outer tube and the lamp base to each other, there are a method of welding the outer tube with the lamp base by heating with a burner or the like and a method of sealing the outer tube and the lamp base to each other with a sealing material containing glass powder and the like. In recent years, the latter method has been gradually adopted for ensuring air-tightness reliability. In particular, in order to simplify the production process of a high intensity discharged lamp or the like, there is studied a method involving fixing a ring-shaped sealing tablet to a lamp base to thereby seal the outer tube and the lamp base to each other.

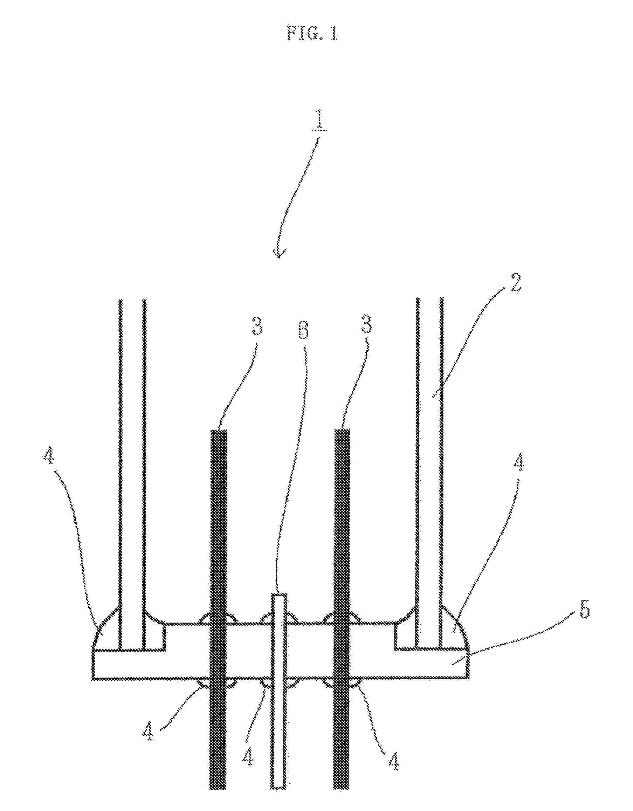

FIG. 1 is a cross-sectional conceptual diagram illustrating a high pressure metal halide lamp 1. As is clear from FIG. 1, an outer tube 2 and a lamp base 5 are sealed to each other via a sealing material 4. Further, a current supply member 3 is inserted through the lamp base 5, and is fixed to the lamp base 5 with the sealing material 4. In addition, an exhaust tube 6 is inserted through the lamp base 5, and is fixed to the lamp base 5 with the sealing material 4. It should be noted that an electric discharge container (not shown) is placed inside the outer tube 2.

The sealing material used for the high intensity discharged lamp requires the following properties.
(1) The thermal expansion coefficient of the sealing material matches with the thermal expansion coefficients of the outer tube and the lamp base, i.e., the sealing material has a low expansion coefficient.
(2) The sealing material may be used for sealing at a temperature lower than the heat-resistant temperatures of the outer tube and the lamp base, and to be specific, the sealing material flows satisfactorily at temperatures of 600°C or lower.
(3) The sealing material is excellent in devitrification resistance, and to be specific, the sealing material is hardly devitrified at temperatures of 600°C or lower.
(4) The sealing material contains as few environmental load substance, e.g., PbO, as possible.

A conventional lead borate-based glass has good compatibility with a low-expansion lead titanate solid solution, and when the lead titanate solid solution is added to glass powder, the thermal expansion coefficient of the sealing material may be set to less than 70×10⁻⁷/°C, and further to 40 to 60×10⁻⁷/°C (for example, refer to Patent Document 1). When the sealing material is used to seal the outer tube and the lamp base to each other, undue stress hardly remains on the outer tube and the lamp base, and air-tightness reliability inside the high intensity discharged lamp may be ensured. As described above, however, the lead borate-based glass has a large content of PbO in the glass composition, and hence does not satisfy recent environmental requirements. The lead titanate solid solution does not satisfy recent environmental requirements, either, because the lead titanate solid solution contains PbO as a main component.

Further, because the bismuth-based glass described in Patent Document 2 has poor thermal stability and has poor compatibility with low-expansion refractory filler powder, the refractory filler powder may not be added in a large amount to the bismuth-based glass, so it is difficult to set the thermal expansion coefficient of the sealing material to less than 70×10⁻⁷/°C, and further to 40 to 60×10⁻⁷/°C. Further, in the bismuth-based glass described in Patent Document 2, the thermal expansion coefficient of the glass itself is larger than 100×10⁻⁷/°C. Accordingly, when the outer tube and the lamp base are sealed to each other by using the sealing material described in Patent Document 2, undue stress remains on the outer tube and the lamp base, because the thermal expansion coefficient of the sealing material becomes large. As a result, cracks are generated on the outer tube and the lamp base, and air-tightness reliability inside the high intensity discharged lamp may not be ensured.

Here, the present invention makes it a technical object to provide a sealing material which satisfies recent environmental requirements, has a small thermal expansion coefficient, is excellent in devitrification resistance, and flows satisfactorily at temperatures of 600°C or lower. Specifically, the present invention makes it a technical object to provide a sealing material suitable for sealing an outer tube and a lamp base used for a high intensity discharged lamp.

Further, in order to lower the thermal expansion coefficient of the sealing material, it is important that the compatibility with refractory filler powder be improved, but it is also important that the thermal expansion coefficient of the glass itself be lowered. Accordingly, the present invention makes it a technical object to provide a glass composition for sealing which satisfies recent environmental requirements, has a small thermal expansion coefficient, and flows satisfactorily at temperatures of 600°C or lower.

### Means for solving the Problems

The inventors of the present invention have conducted intensive studies, and have found that the above technical objects can be achieved by, in a sealing material containing glass powder and refractory filler powder, regulating the glass powder to 35 to 75 vol% and the refractory filler powder to 25 to 65 vol%, regulating the thermal expansion coefficient of the sealing material to less than 70×10⁻⁷/°C, and still further, regulating the glass composition range of the glass powder to, in terms of mass%, 55 to 85% of Bi₂O₃, 5 to 20% of B₂O₃, 1 to 15% of ZnO, and 0 to 7% of SiO₂, and the finding is proposed as the present invention. That is, the sealing material of the present invention includes a glass powder and a refractory filler powder, **characterized in that**: (1) the sealing material includes, in terms of vol%, 35 to 75% of the glass powder and 25 to 65% of the refractory filler powder; (2) the sealing material has a thermal expansion coefficient of less than 70×10⁻⁷/°C; and (3) the glass powder includes, as a glass composition, in terms of mass%, 55 to 85% of Bi₂O₃, 5 to 20% of B₂O₃, 1 to 15% of ZnO, and 0 to 7% of SiO₂. Here, the term "thermal expansion coefficient" as used in the present invention refers to a value measured by a push-rod type thermal expansion coefficient measuring (thermomechanical analysis: TMA) apparatus at a temperature range of 30 to 300°C.

Second, the sealing material of the present invention is **characterized in that** thermal expansion coefficient is less than 65×10⁻⁷/°c.

Third, the sealing material of the present invention is **characterized in that** thermal expansion coefficient is less than 60×10⁻⁷/°c.

Fourth, the sealing material of the present invention is **characterized in that** the refractory filler powder is substantially free of ZnO and/or P₂O₅. Here, the phrase "substantially free of ZnO" refers to the case where the content of ZnO in the constituent components of the refractory filler powder is 1 mass% or less (preferably 1,000 ppm or less). Further, the phrase "substantially free of P₂O₅" refers to the case where the content of P₂O₅ in the constituent components of the refractory filler powder is 1 mass% or less (preferably 1,000 ppm or less).

Fifth, the sealing material of the present invention is **characterized in that** the refractory filler powder comprises cordierite.

Sixth, the sealing material of the present invention is **characterized in that** the glass powder further includes 1 to 10 mass% of BaO as a glass composition, and the glass powder has a value of ZnO/BaO in a molar ratio of larger than 3.

Seventh, the sealing material of the present invention is **characterized in that** the glass powder includes, as a glass composition, in terms of mass%, 60 to less than 77% of Bi₂O₃, 6 to 15% of B₂O₃, 5 to 15% of ZnO, 1 to 9% of BaO, 0 to 5% of CuO, 0 to 2% of Fe₂O₃, 1 to 5% of SiO₂ provided that 1% is excluded, and 0 to 5% of Al₂O₃, and the glass powder has a value of ZnO/BaO in a molar ratio of larger than 3.

Eighth, the sealing material of the present invention is characterized by being noncrystalline. Here, the term "noncrystalline" refers to the property of the sealing material that the crystallization peak is not exhibited up to 600°C when the sealing material is measured by a differential thermal analysis (DTA) apparatus. Here, DTA is performed in the atmosphere, has a rate of temperature rise of 10°C/min, and initiates measurement from room temperature.

Ninth, the sealing material of the present invention is characterized by being substantially free of PbO. Here, the phrase "be substantially free of PbO" refers to the case where the content of PbO in the glass composition is 1,000 ppm or less.

Tenth, the sealing material of the present invention is characterized by having a softening point of 570°C or lower. Here, the term "softening point" refers to a value measured by a macro-type DTA apparatus. Here, DTA is performed in the atmosphere, has a rate of temperature rise of 10°C/min, and initiates measurement from room temperature.

Eleventh, the sealing material of the present invention is characterized by being used for sealing a material having a thermal expansion coefficient of 30 to 65×10⁻⁷/°C.

Twelfth, the sealing material of the present invention is characterized by being used for sealing a lamp.

Thirteenth, further, a sealing tablet of the present invention is characterized by including a sealing material sintered into a predetermined shape, in which the sealing material is the above-mentioned sealing material. When the sealing tablet is used, the production process of a high intensity discharged lamp or the like may be simplified. It should be noted that the shape of the sealing tablet is not particularly limited, and a ring shape is preferred, considering fixing the high intensity discharged lamp or the like to a lamp base.

Further, the inventors of the present invention have conducted intensive studies, and have found that the above technical objects can be achieved by regulating a glass composition range to, in terms of mass%, 60 to less than 77% of Bi₂O₃, 5 to 20% of B₂O₃, 3 to 15% of ZnO, and 1 to 7% of SiO₂ (provided that 1% is excluded), and regulating a thermal expansion coefficient in a temperature range of 30 to 300°C to 100×10⁻⁷/°C or less, and the finding is proposed as the present invention. That is, the glass composition for sealing of the present invention is characterized by including, as a glass composition, in terms of mass%, 60 to less than 77% of Bi₂O₃, 5 to 20% of B₂O₃, 3 to 15% of ZnO, and 1 to 7% of SiO₂ (provided that 1% is excluded), and having a thermal expansion coefficient in a temperature range of 30 to 300°C of 100×10⁻⁷/°C or less. Here, the phrase "thermal expansion coefficient in a temperature range of 30 to 300°C" refers to a value measured by a push-rod type thermal expansion coefficient measuring (TMA) apparatus.

Second, the glass composition for sealing of the present invention is further characterized by including 1 to 10 mass% of BaO as a glass composition and has a value of ZnO/BaO in a molar ratio of larger than 3.

Third, the glass composition for sealing of the present invention is characterized by including, as a glass composition, in terms of mass%, 60 to less than 77% of Bi₂O₃, 6 to 15% of B₂O₃, 5 to 15% of ZnO, 1 to 9% of BaO, 0 to 5% of CuO, 0 to 2% of Fe₂O₃, 1 to 5% of SiO₂ (provided that 1% is excluded), and 0 to 7% of Al₂O₃, and has a value of ZnO/BaO in a molar ratio of larger than 3.

Fourth, the glass composition for sealing of the present invention is characterized by further including 1 to 7 mass% of Al₂O₃ as a glass composition.

Fifth, the glass composition for sealing of the present invention is characterized by being noncrystalline. Here, the term "noncrystalline" refers to the property of the sealing material that the crystallization peak is not exhibited up to 600°C when the sealing material is measured by a differential thermal analysis (DTA) apparatus. Here, DTA is performed in the atmosphere, has an average particle size D₅₀ of the measurement sample of 10 µm, has a rate of temperature rise of 10°C/min, and initiates measurement from room temperature. It should be noted that the "average particle size D₅₀" as used in the present invention refers to a value measured by a laser diffraction method.

Sixth, the glass composition for sealing of the present invention is characterized by being substantially free of PbO. Here, the phrase "be substantially free of PbO" refers to the case where the content of PbO in the glass composition is 1,000 ppm or less.

Seventh, the glass composition for sealing of the present invention is characterized by being used for sealing a lamp.

### Best Mode for carrying out the Invention

In a sealing material of the present invention, the reason for limiting the range of a glass composition of a glass powder to the above range is as follows. It should be noted that, unless otherwise mentioned, "%" used below means "mass%".

Bi₂O₃ is a main component for lowering the softening point of the glass, and the content of Bi₂O₃ is 55 to 85%, preferably 60 to less than 77%, more preferably 64 to less than 77%, still more preferably 69 to less than 77%, and particularly preferably 71 to 76%. When the content of Bi₂O₃ is less than 55%, the softening point of the glass becomes too high, and it becomes difficult for the glass to flow at temperatures of 600°C or lower. On the other hand, when the content of Bi₂O₃ is 77% or more, the thermal stability of the glass easily lowers and the raw material cost of the glass becomes high. In addition, when the content of Bi₂O₃ is 85% or more, the increase in the thermal expansion coefficient of the glass is easily caused.

B₂O₃ is essential as a glass forming component, and the content of B₂O₃ is 5 to 20%, preferably 6 to 15%, and more preferably 7 to 13%. When the content of B₂O₃ is less than 5%, a glass network is not sufficiently formed, and hence, the glass is easily devitrified. On the other hand, when the content of B₂O₃ is more than 20%, the viscosity of the glass tends to become high, and it becomes difficult for the glass to flow at temperatures of 600°C or lower.

ZnO has effects of suppressing the devitrification of the glass and suppressing the increase in the viscosity of the glass, and the content of ZnO is 1 to 15%, preferably 3 to 15%, more preferably 5 to 15%, and still more preferably 7 to 13%. When the content of ZnO is less than 1%, the effect of suppressing the devitrification of the glass is hardly exhibited, the increase in the thermal expansion coefficient of the glass is easily caused, and in addition, the viscosity of the glass tends to become high, and it becomes difficult for the glass to flow at temperatures of 600°C or lower. On the other hand, when the content of ZnO is more than 15%, the thermal stability of the glass easily lowers.

SiO₂ is a component which, at the time of firing the sealing material, prevents a situation that a crystal deposits on the surface of the glass, improves the water resistance of the glass, and lowers the thermal expansion coefficient of the glass. The content of SiO₂ is 0 to 7%, preferably 1 to 7% (provided that 1% is excluded), more preferably 1 to 5% (provided that 1% is excluded), and still more preferably 1.1 to 4%. When the content of SiO₂ is more than 7%, the softening point of the glass becomes high, and it becomes difficult for the glass to flow at temperatures of 600°C or lower.

In the sealing material of the present invention, the following components other than the above components may be contained in the glass composition of a glass powder.

BaO is a component which has an effect of suppressing the devitrification of the glass at the time of melting, and the content of BaO is preferably 0 to 10%, more preferably 1 to 7%, and still more preferably 1 to 5%. In particular, when the content of BaO is set to 1 to 7%, the thermal stability of the glass may be improved while suppressing the increase in the viscosity of the glass. When the content of BaO is more than 10%, the glass transition point becomes high, it becomes difficult for the glass to flow at temperatures of 600°C or lower, and the thermal expansion coefficient of the glass easily increases.

The molar ratio ZnO/BaO is a components ratio which influences the thermal expansion coefficient of the glass and the viscosity of the glass, and the value of the molar ratio is preferably larger than 3, more preferably 3.5 or more, still more preferably 4 or more, and particularly preferably 10 or more. When the molar ratio ZnO/BaO is 3 or less, the increase in the thermal expansion coefficient of the glass is easily caused. There is no particular upper limit to the value of the molar ratio ZnO/BaO, and when the thermal stability of the glass is taken into consideration, the value is preferably set to 40 or less and more preferably set to 30 or less.

CuO is a component which has an effect of suppressing the devitrification of the glass, and the content of CuO is preferably 0 to 5%, more preferably 0 to 3%, and still more preferably 0.1 to 2.5%. When the content of CuO is more than 5%, the balance with other components is disturbed, and the other way around, the deposition rate of a crystal increases, that is, the devitrification tendency increases, and hence, the flowability of the glass tends to deteriorate.

Fe₂O₃ is a component which suppresses the devitrification of the glass at the time of melting, and the content of Fe₂O₃ is preferably 0 to 2%, more preferably 0 to 1%, and still more preferably 0.1 to 0.7%. When the content of Fe₂O₃ is more than 2%, the glass easily undergoes phase separation at the time of melting.

Al₂O₃ is a component which, at the time of firing the sealing material, prevents a situation that a crystal deposits on the surface of the glass, improves the water resistance of the glass, and lowers the thermal expansion coefficient of the glass. The content of Al₂O₃ is preferably 0 to 5% and more preferably 0 to 3%. When the content of Al₂O₃ is more than 5%, the softening point of the glass becomes high, and it becomes difficult for the glass to flow at temperatures of 600°C or lower.

SrO, MgO, and CaO are components each of which has an effect of suppressing the devitrification of the glass at the time of melting, and the total amount of those components (SrO+MgO+CaO) is preferably 0 to 10% and more preferably 0 to 7%. When the content of SrO+MgO+CaO is more than 10%, the glass transition point tends to become high. It should be noted that the content of each of SrO, MgO, and CaO is preferably 0 to 5%. When the content of each of SrO, MgO, and CaO is more than 5%, the balance with other components is disturbed, and the other way around, the deposition rate of a crystal increases, that is, the devitrification tendency increases, and hence, there is a tendency that the flowability of the glass deteriorates.

CeO₂ is a component for suppressing the devitrification property of the glass, and the content of CeO₂ is preferably 0 to 5%, more preferably 0 to 3%, and still more preferably 0 to 1%. When the content of CeO₂ is more than 5%, the softening point of the glass rises, and it becomes difficult for the glass to flow at temperatures of 600°C or lower.

WO₃ is a component for suppressing the devitrification of the glass, and the content of WO₃ is preferably 0 to 5% and more preferably 0 to 2%. In order to lower the softening point of bismuth-based glass, the content of Bi₂O₃ as a main component needs to be increased, but when the content of Bi₂O₃ is increased, the glass is easily devitrified at the time of firing. In particular, when the content of Bi₂O₃ is 70% or more, the tendency becomes remarkable. Here, when an appropriate amount of WO₃ is added thereto, the devitrification of the glass may be suppressed even in the case where the content of Bi₂O₃ is 70% or more. On the other hand, when the content of WO₃ is more than 5%, the balance with other components is disturbed, and the other way around, the thermal stability of the glass tends to deteriorate.

Sb₂O₃ is a component for suppressing the devitrification of the glass, and the content of Sb₂O₃ is preferably 0 to 5% and more preferably 0 to 2%. In order to lower the softening point of bismuth-based glass, the content of Bi₂O₃ as a main component needs to be increased, but when the content of Bi₂O₃ is increased, the glass is easily devitrified at the time of firing. In particular, when the content of Bi₂O₃ is 70% or more, the tendency becomes remarkable. Here, when an appropriate amount of WO₃ is added thereto, the devitrification of the glass may be suppressed even in the case where the content of Bi₂O₃ is 70% or more. On the other hand, when the content of Sb₂O₃ is more than 5%, the balance with other components is disturbed, and the other way around, the thermal stability of the glass tends to deteriorate.

In₂O₃+Ga₂O₃ is a component for suppressing the devitrification of the glass, and is a component to be added for the purpose of preventing the flowability of the glass from being impaired due to the deposition of a crystal on bismuth-based glass at the time of firing. The content of In₂O₃+Ga₂O₃ is preferably 0 to 7%, more preferably 0 to 5%, and still more preferably 0 to 3%. In order to lower the softening point of bismuth-based glass, the content of Bi₂O₃ as a main component needs to be increased, but when the content of Bi₂O₃ is increased, the glass is easily devitrified at the time of firing. In particular, when the content of Bi₂O₃ is 70% or more, the tendency becomes remarkable. Here, when an appropriate amount of In₂O₃+Ga₂O₃ is added thereto, the devitrification of the glass may be suppressed even in the case where the content of Bi₂O₃ is 70% or more. On the other hand, when the content of In₂O₃+Ga₂O₃ is more than 7%, the balance with other components is disturbed, and the other way around, the thermal stability of the glass tends to deteriorate. In particular, for the purpose of suppressing the devitrification of the glass, the content of In₂O₃ is preferably regulated to 0 to 3%. Further, for the same reason, the content of Ga₂O₃ is preferably regulated to 0 to 3%.

Li₂O, Na₂O, K₂O and Cs₂O, which are alkali metal oxides, are components which lower the softening point of the glass, but each have a function of promoting the devitrification of the glass at the time of melting, and hence, the total amount of those components is preferably 2% or less.

P₂O₅ is a component which suppresses the devitrification of the glass at the time of melting, but when the content of P₂O₅ is large, the glass easily undergoes phase separation at the time of melting. Therefore, the content of P₂O₅ is preferably 1% or less.

MoO₃+La₂O₃+Y₂O₃ (total amount of MoO₃, La₂O, and Y₂O₃) has an effect of suppressing the phase separation of the glass at the time of melting, but when the total amount of those components is large, the softening point of the glass becomes high, and it becomes difficult for the glass to flow at temperatures of 600°C or lower. Therefore, the total amount of those components is preferably 3% or less.

As mentioned above, the glass powder according to the present invention is, as a glass composition, preferably substantially free of PbO from the environmental requirements. Further, when PbO is contained in the glass composition of bismuth-based glass, Pb²⁺ is diffused into the glass, and hence, the electrical insulating properties may deteriorate.

It should be noted that, the glass powder according to the present invention may contain, as a glass composition, components other than the above components up to 10%.

In the above glass composition range, it is possible to appropriately select the suitable content range for each of the components to thereby obtain a further preferable glass composition range. Specifically, it is preferred that the glass powder include, as a glass composition range, 60 to less than 77% of Bi₂O₃, 6 to 15% of B₂O₃, 5 to 15% of ZnO, 1 to 9% of BaO, 0 to 5% of CuO, 0 to 2% of Fe₂O, 1 to 5% of SiO₂ (provided that 1% is excluded), and 0 to 5% of Al₂O₃, and that the glass powder have a value of ZnO/BaO in a molar ratio of larger than 3. In such a manner, the thermal expansion coefficient of the glass may be securely lowered.

In the sealing material of the present invention, the thermal expansion coefficient is less than 70×10⁻⁷/°C, preferably less than 65×10⁻⁷/°C, more preferably less than 60×10⁻⁷/°C, and still more preferably less than 55×10⁻⁷/°C. When the thermal expansion coefficient is 70×10⁻⁷/°C or more, the thermal expansion coefficient of the sealing material does not match with that of boron silicate glass or the like, and undue stress remains on the boron silicate glass or the like and a sealed part (sealed layer) after sealing. As a result, cracks and the like are easily generated on the boron silicate glass or the like and the sealed part (sealed layer), and hence, it becomes difficult to ensure air-tightness reliability of the high intensity discharged lamp and the like. The lower limit value of the thermal expansion coefficient of the sealing material is not particularly limited, but in general, when the thermal expansion coefficient of the glass is too small, the softening point of the glass easily rises, and when the content of the refractory filler powder is too large, the flowability of the sealing material becomes poor. Therefore, the thermal expansion coefficient of the sealing material is set, as a guide, to 35×10⁻⁷/°C or more.

The sealing material of the present invention is preferably noncrystalline. In such a manner, a crystal hardly deposits on the surface of the glass by firing at 600°C or lower, that is, the glass is hardly devitrified before the glass begins to flow, and hence, a desired flowability is easily ensured. Further, when the sealing material is noncrystalline, the sealing strength increases, and hence, air-tightness reliability of the high intensity discharged lamp and the like is easily ensured.

In the sealing material of the present invention, the mixing ratio of the glass powder to the refractory filler powder is 35 to 75 vol% of the glass powder to 25 to 65 vol% of the refractory filler powder, preferably 37 to 64 vol% of the glass powder to 36 to 63 vol% of the refractory filler powder, and more preferably 40 to 60 vol% of the glass powder to 40 to 60 vol% of the refractory filler powder. The reason for regulating the ratio to the above is that, when the ratio of the refractory filler powder is less than 25 vol%, it becomes difficult to regulate the thermal expansion coefficient of the sealing material to less than 70×10⁻⁷/°C, and as a result, the thermal expansion coefficient of the sealing material hardly matches with that of an article to be sealed, and hence, the sealed part and the article to be sealed are easily broken due to residual stress. On the other hand, when the ratio of the refractory filler powder is more than 65 vol%, the content of the glass powder becomes relatively small, and hence, the flowability of the sealing material deteriorates and it becomes difficult to ensure air-tightness reliability of the high intensity discharged lamp and the like.

It is desired that the refractory filler powder have a low thermal expansion coefficient and high mechanical strength. As the refractory filler powder, there can be used willemite, zircon, tin oxide, cordierite, β-eucryptite, aluminum titanate, celsian, quartz glass, alumina, mullite, β-spodumene, alumina-silica type ceramics, zirconium tungstate, a crystalline compound having a basic structure of an NZP type crystal (such as [AB₂(MO₄)₃]), where A represents Li, Na, K, Mg, Ca, Sr, Ba, Zn, Cu, Ni, Mn, or the like, B represents Zr, Ti, Sn, Nb, Al, Sc, Y, or the like, and M represents Si, W, Mo, or the like, and a solid solution thereof.

It is required for the refractory filler powder to have low reactivity to such an extent that, when the refractory filler powder is added to the glass powder, the thermal stability is not lowered. From the above viewpoint, it is preferred that the refractory filler powder be substantially free of ZnO and/or P₂O₅. In the case where the sealing material contains the refractory filler powder, attributed to the fact that a part of the refractory filler powder, i.e., a surface layer part of the refractory filler powder, is dissolved into the glass at the time of firing the sealing material, the dissolved component of the refractory filler powder acts as a crystal nucleus and may promote the devitrification of the glass surface. In the bismuth-based glass, when the contents of ZnO and P₂O₅ in the glass composition increase, the thermal stability of the glass is lowered. Therefore, it becomes easier to prevent a situation that a crystal deposits on the surface of the glass, by allowing the refractory filler powder to be substantially free of ZnO and/of P₂O₅ as the constituent components.

As the refractory filler powder, it is preferred to use a refractory filler powder substantially free of PbO from the environmental requirements.

As the refractory filler powder, cordierite is particularly preferred, because cordierite is highly effective in suppressing the devitrification of bismuth-based glass, is low in thermal expansion, and has excellent mechanical strength.

Further, when the refractory filler powder is coated with alumina, zinc oxide, zircon, titania, zirconia, or the like, the reaction between the glass powder and the refractory filler powder may be adjusted.

In the sealing material of the present invention, the softening point is preferably 570°C or lower and more preferably 550°C or lower. When the softening point of the sealing material is higher than 570°C, it becomes difficult for the sealing material to flow by firing at 600°C or lower, and hence, desired sealing strength may not be ensured.

The sealing material of the present invention is preferably used for sealing a material having a thermal expansion coefficient of 30 to 65×10⁻⁷/°C, and is more preferably used for sealing a material having a thermal expansion coefficient of 35 to 60×10⁻⁷/°C. Specifically, the sealing material of the present invention may be suitably used for sealing glass materials such as boron silicate glass and non-alkali glass, a metal material such as kovar, a ceramic material such as aluminum nitride, and the like. In the sealing material of the present invention, the thermal expansion coefficient is regulated to less than 70×10⁻⁷/°C, and hence, the thermal expansion coefficient of the sealing material easily matches with the thermal expansion coefficients of those materials and undue stress hardly remains on the article to be sealed and the sealed part after sealing, resulting in that cracks are hardly generated on the materials and air-tightness reliability is hardly impaired. When the thermal expansion coefficient of the article to be sealed is smaller than 30×10⁻⁷/°C, the thermal expansion coefficient of the sealing material does not match with that of the article to be sealed, and undue stress easily remains on the article to be sealed and the sealed part after sealing. Further, when the thermal expansion coefficient of the article to be sealed is larger than 65×10⁻⁷/°C, the thermal expansion coefficient of the sealing material does not match with that of the article to be sealed, and undue stress easily remains on the article to be sealed and the sealed part after sealing.

The sealing material of the present invention is preferably used for sealing a lamp, more preferably used for sealing a high intensity discharged lamp, and still more preferably used for sealing a high pressure metal halide lamp. When a lamp is sealed by using the sealing material of the present invention, the production process may be simplified and the air-tightness reliability may be ensured.

The sealing material of the present invention has a thermal expansion coefficient of less than 70×10⁻⁷/°C, so the thermal expansion coefficient of the sealing material may be matched with that of boron silicate glass or the like. Further, the sealing material of the present invention flows satisfactorily at temperatures of 600°C or lower, because the glass powder has a low melting point, and is hardly devitrified at temperatures of 600°C or lower, because the sealing material is also excellent in devitrification resistance. In addition, the sealing material of the present invention may have a composition being substantially free of PbO, and hence may satisfy environmental requirements in recent years. Accordingly, the sealing material of the present invention may satisfy the above-mentioned properties (1) to (4), which are required for the sealing material, and therefore is suitable for sealing an outer tube and a lamp base of a high intensity discharged lamp. It should be noted that, because the sealing material of the present invention has the above-mentioned properties, the sealing material is also suitable for sealing a current supply member and the lamp base, and for sealing an exhaust tube and the lamp base.

In the production process of the high intensity discharged lamp or the like, the sealing material is mixed with a vehicle, and is formed into a paste to be used for coating an article to be sealed, or is processed into a tablet to be fixed to an article to be sealed.

The application of the glass paste may be conducted by using an application machine such as a screen printing machine or a dispenser. It is necessary that the glass paste be regulated to have an appropriate viscosity for accurately forming a desired sealing pattern. Further, it is also required that the glass paste be immediately dried after applying, and that an organic resin decompose satisfactorily during a glazing process. Under those circumstances, there is generally used, as the vehicle, a substance in which an organic resin easily decomposed at low temperatures is dissolved into a volatile organic solvent.

The organic resin is a component which adjusts the viscosity of the paste, and the addition amount of the organic resin is preferably 1 to 20 mass% with respect to 100 mass% of the sealing material. As the organic resin, there may be used an acrylic resin, ethyl cellulose, a polyethylene glycol derivative, nitrocellulose, polymethylstyrene, polyethylene carbonate, methacrylate, and the like. In particular, an acrylic resin and nitrocellulose have good thermal decomposition properties and therefore are preferred.

The organic solvent is a component for making the sealing material into a paste form, and the addition amount of the organic solvent is preferably 5 to 30 mass% with respect to 100 mass% of the sealing material. As the organic solvent, there can be used N,N'-dimethylformamide (DMF),α-terpineol, a higher alcohol, γ-butyrolactone (γ-BL), tetralin, butyl carbitol acetate, ethyl acetate, isoamyl acetate, diethylene glycol monoethyl ether, diethylene glycol monoethyl ether acetate, benzyl alcohol, toluene, 3-methoxy-3-methylbutanol, triethylene glycol monomethyl ether, triethylene glycol dimethyl ether, dipropylene glycol monomethyl ether, dipropylene glycol monobutyl ether, tripropylene glycol monomethyl ether, tripropylene glycol monobutyl ether, propylene carbonate, dimethyl sulfoxide (DMSO), N-methyl-2-pyrrolidone, and the like. In particular, α-terpineol is preferred because of its high viscosity and good solubility of an organic resin and the like.

The sealing tablet is produced by, as described below, undergoing multiple heat treatment processes separately and independently. First, an organic resin and an organic solvent are added to the sealing material to thereby form slurry. After that, the slurry is charged into a granulating machine such as a spray drier to thereby produce granules. At that time, the granules are heat-treated at about a temperature at which the organic solvent volatilizes (about 100 to 200°C). In addition, the produced granules are charged into a die designed to have a predetermined size, subjected to dry pressing molding into a ring shape, and as a result, a pressed body is produced. Next, in a heat-treating furnace such as a belt furnace, a binder remaining in the pressed body is decomposed and volatilized, and the pressed body is sintered at about the same temperature as the softening point of the glass powder, to thereby produce a sealing tablet. Further, there are some cases where the sintering in the heat-treating furnace is performed several times. When the sintering is performed several times, the strength of the sealing tablet improves, and defect, breakage, and the like of the sealing tablet may be prevented.

The organic resin is a component which combines powders to cause granulation, and the addition amount of the organic resin is preferably 0 to 20 mass% with respect to 100 mass% of the sealing material. As the organic resin, there may be used an acrylic resin, ethyl cellulose, a polyethylene glycol derivative, nitrocellulose, polymethylstyrene, polyethylene carbonate, methacrylate, and the like. In particular, an acrylic resin is preferred because of its good thermal decomposition properties.

When the organic solvent is added at the time of granulating the sealing material, the sealing material is easily granulated by a spray drier or the like and the grain size of the granule is easily adjusted. The addition amount of the organic solvent is preferably 5 to 35 mass% with respect to 100 mass% of the sealing material. As the organic solvent, there can be used N,N'-dimethylformamide (DMF),α-terpineol, a higher alcohol, γ-butyrolactone (γ-BL), tetralin, butyl carbitol acetate, ethyl acetate, isoamyl acetate, diethylene glycol monoethyl ether, diethylene glycol monoethyl ether acetate, benzyl alcohol, toluene, 3-methoxy-3-methylbutanol, triethylene glycol monomethyl ether, triethylene glycol dimethyl ether, dipropylene glycol monomethyl ether, dipropylene glycol monobutyl ether, tripropylene glycol monomethyl ether, tripropylene glycol monobutyl ether, propylene carbonate, dimethyl sulfoxide (DMSO), N-methyl-2-pyrrolidone, and the like. In particular, tolulene is preferred because it has good solubility of an organic resin and the like and volatilization is well performed at approximately 150°C.

The sealing material of the present invention is preferably used for sealing an organic EL display. In such a manner, air tightness inside the organic EL display may be ensured, and as a result, deterioration with time of an organic light emitting layer or the like may be prevented and long lifetime of the organic EL display may be realized. In the organic EL display, it is necessary to perform sealing at low temperature, because the organic light emitting layer, TFT, and the like are easily heat-deteriorated. Under those circumstances, in the organic EL display, the sealing material is locally heated by using a laser beam or the like, in order to suppress heat deterioration of constituent members, to thereby seal glass substrates to each other. In the sealing material of the present invention, when the content of CuO+Fe₂O₃ (total amount of CuO and Fe₂O₃) as a glass composition is set to 0.1 % or more, the sealing material easily absorbs the laser beam or the like and may be suitably used for sealing an organic EL display. Further, the sealing material of the present invention flows satisfactorily at a temperature range of 600°C or lower, and hence may firmly seal the glass substrates to each other by being locally heated with the laser beam or the like.

In the case of using the sealing material of the present invention for sealing an organic EL display, the thermal expansion coefficient of the sealing material is preferably less than 65×10⁻⁷/°C and more preferably less than 60×10⁻⁷/°C. In general, a non-alkali glass substrate (40×10⁻⁷/°C or less) is used as a glass substrate of the organic EL display. When the thermal expansion coefficient of the sealing material is regulated to less than 65×10⁻⁷/°C, the thermal expansion coefficient of the sealing material easily matches with that of the non-alkali glass substrate, and hence, undue stress hardly remains in the sealed part.

Further, in the glass composition for sealing of the present invention, the reason for limiting the range of a glass composition to the above range is as follows. It should be noted that, unless otherwise mentioned, "%" used below means "mass%".

Bi₂O₃ is a main component for lowering the softening point of the glass, and the content of Bi₂O₃ is 60 to less than 77%, preferably 64 to less than 77%, more preferably 69 to less than 77%, and still more preferably 71 to 76%. When the content of Bi₂O₃ is less than 60%, the softening point of the glass becomes too high, and it becomes difficult for the glass to flow at temperatures of 600°C or lower. On the other hand, when the content of Bi₂O₃ is 77% or more, the thermal stability of the glass easily lowers and the raw material cost of the glass becomes high. In addition, when the content of Bi₂O₃ is 77% or more, the increase in the thermal expansion coefficient of the glass is easily caused.

B₂O₃ is essential as a glass forming component, and the content of B₂O₃ is 5 to 20%, preferably 6 to 15%, and more preferably 7 to 13%. When the content of B₂O₃ is less than 5%, a glass network is not sufficiently formed, and hence, the glass is easily devitrified. On the other hand, when the content of B₂O₃ is more than 20%, the viscosity of the glass tends to become high, and it becomes difficult for the glass to flow at temperatures of 600°C or lower.

ZnO has effects of suppressing the devitrification of the glass and suppressing the increase in the viscosity of the glass, and the content of ZnO is 3 to 15%, preferably 5 to 15%, and more preferably 7 to 13%. When the content of ZnO is less than 3%, the effect of suppressing the devitrification of the glass is hardly exhibited, the increase in the thermal expansion coefficient of the glass is easily caused, and in addition, the viscosity of the glass tends to become high, and it becomes difficult for the glass to flow at temperatures of 600°C or lower. On the other hand, when the content of ZnO is more than 15%, the thermal stability of the glass easily lowers.

SiO₂ is a component which, at the time of firing the sealing material, prevents a situation that a crystal deposits on the surface of the glass, improves the water resistance of the glass, and lowers the thermal expansion coefficient of the glass. The content of SiO₂ is 1 to 7% (provided that 1% is excluded), preferably 1 to 5% (provided that 1% is excluded), and more preferably 1.1 to 4%. When the content of SiO₂ is less than 1%, the above-mentioned effects are hardly exhibited. When the content of SiO₂ is more than 7%, the softening point of the glass becomes too high, and it becomes difficult for the glass to flow at temperatures of 600°C or lower.

In the glass composition for sealing of the present invention, the following components other than the above components may be contained.

BaO is a component which has an effect of suppressing the devitrification of the glass at the time of melting, and the content of BaO is preferably 0 to 10%, more preferably 1 to 7%, and still more preferably 1 to 5%. In particular, when the content of BaO is set to 1 to 7%, the thermal stability of the glass may be improved while suppressing the increase in the viscosity of the glass. When the content of BaO is more than 10%, the glass transition point becomes too high, it becomes difficult for the glass to flow at temperatures of 600°C or lower, and the thermal expansion coefficient of the glass easily increases.

The molar ratio ZnO/BaO is a component ratio which influences the thermal expansion coefficient of the glass and the viscosity of the glass, and the value of the molar ratio is preferably larger than 3, more preferably 3.5 or more, still more preferably 4.0 or more, and particularly preferably 10.0 or more. When the molar ratio ZnO/BaO is 3 or less, the increase in the thermal expansion coefficient of the glass is easily caused, and the thermal expansion coefficient in a temperature range of 30 to 300°C does not easily lower to 100×10⁻⁷/°C or less. There is no particular upper limit to the value of the molar ratio ZnO/BaO, and when the thermal stability of the glass is taken into consideration, the value is preferably set to 40.0 or less and more preferably set to 30.0 or less.

CuO is a component which has an effect of suppressing the devitrification of the glass, and the content of CuO is preferably 0 to 5%, more preferably 0 to 3%, and still more preferably 0.1 to 2.5%. When the content of CuO is more than 5%, the balance with other components is disturbed, and the other way around, the deposition rate of a crystal increases, that is, the devitrification tendency increases, and hence, the flowability of the glass tends to deteriorate.

Fe₂O₃ is a component which suppresses the devitrification of the glass at the time of melting, and the content of Fe₂O₃ is preferably 0 to 2%, more preferably 0 to 1%, and still more preferably 0.1 to 0.7%. When the content of Fe₂O₃ is more than 2%, the glass easily undergoes phase separation at the time of melting.

Al₂O₃ is a component which, at the time of firing the sealing material, prevents a situation that a crystal deposits on the surface of the glass, improves the water resistance of the glass, and lowers the thermal expansion coefficient of the glass. The content of Al₂O₃ is preferably 0 to 7%, more preferably 1 to 7%, and still more preferably 1 to 5%, and particularly preferably 1 to 3%. When the content of Al₂O₃ is more than 7%, the softening point of the glass becomes too high, and it becomes difficult for the glass to flow at temperatures of 600°C or lower.

The inventors of the present invention have conducted studies in detail, and have found that, in the glass composition for sealing of the present invention, the thermal expansion coefficient of the glass may be remarkably lowered while maintaining the property of having low softening point, when SiO₂ and Al₂O₃ coexist as essential components. For example, compared with the glass containing 6% of SiO₂ (free of Al₂O₃), the glass containing 3% of a SiO₂ component and 3% of Al₂O₃ and having the same contents of other components has the equal glass transition point, but has a lowered thermal expansion coefficient by about 4×10⁻⁷°C.

SrO, MgO, and CaO are components each of which has an effect of suppressing the devitrification of the glass at the time of melting, and the total amount of those components (SrO+MgO+CaO) is preferably 0 to 10% and more preferably 0 to 7%. When the content of SrO+MgO+CaO is more than 10%, the glass transition point tends to become high. It should be noted that the content of each of SrO, MgO, and CaO is preferably 0 to 5%. When the content of each of SrO, MgO, and CaO is more than 5%, the balance with other components is disturbed, and the other way around, the deposition rate of a crystal increases, that is, the devitrification tendency increases, and hence, there is a tendency that the flowability of the glass deteriorates.

CeO₂ is a component for suppressing the devitrification of the glass, and the content of CeO₂ is preferably 0 to 5%, more preferably 0 to 3%, and still more preferably 0 to 1%. When the content of CeO₂ is more than 5%, the softening point of the glass rises, and it becomes difficult for the glass to flow at temperatures of 600°C or lower.

WO₃ is a component for suppressing the devitrification of the glass, and the content of WO₃ is preferably 0 to 5% and more preferably 0 to 2%. In order to lower the softening point of bismuth-based glass, the content of Bi₂O₃ as a main component needs to be increased, but when the content of Bi₂O₃ is increased, the glass is easily devitrified at the time of firing. In particular, when the content of Bi₂O₃ is 70% or more, the tendency becomes remarkable. Here, when an appropriate amount of WO₃ is added thereto, the devitrification of the glass may be suppressed even in the case where the content of Bi₂O₃ is 70% or more. On the other hand, when the content of WO₃ is more than 5%, the balance with other components is disturbed, and the other way around, the thermal stability of the glass tends to deteriorate.

Sb₂O₃ is a component for suppressing the devitrification of the glass, and the content of Sb₂O₃ is preferably 0 to 5% and more preferably 0 to 2%. In order to lower the softening point of bismuth-based glass, the content of Bi₂O₃ as a main component needs to be increased, but when the content of Bi₂O₃ is increased, the glass is easily devitrified at the time of firing. In particular, when the content of Bi₂O₃ is 70% or more, the tendency becomes remarkable. Here, when an appropriate amount of WO₃ is added thereto, the devitrification of the glass may be suppressed even in the case where the content of Bi₂O₃ is 70% or more. On the other hand, when the content of Sb₂O₃ is more than 5%, the balance with other components is disturbed, and the other way around, the thermal stability of the glass tends to deteriorate.

In₂O₃+Ga₂O₃ is a component for suppressing the devitrification of the glass, and is a component to be added for the purpose of preventing the flowability of the glass from being impaired due to the deposition of a crystal on bismuth-based glass at the time of firing. The content of In₂O₃+Ga₂O₃ is preferably 0 to 7%, more preferably 0 to 5%, and still more preferably 0 to 3%. In order to lower the softening point of bismuth-based glass, the content of Bi₂O₃ as a main component needs to be increased, but when the content of Bi₂O₃ is increased, the glass easily devitrified at the time of firing. In particular, when the content of Bi₂O₃ is 70% or more, the tendency becomes remarkable. Here, when an appropriate amount of In₂O₃+Ga₂O₃ is added thereto, the devitrification of the glass may be suppressed even in the case where the content of Bi₂O₃ is 70% or more. On the other hand, when the content of In₂O₃+Ga₂O₃ is more than 7%, the balance with other components is disturbed, and the other way around, the thermal stability of the glass tends to deteriorate. In particular, for the purpose of suppressing the devitrification of the glass, the content of In₂O₃ is preferably regulated to 0 to 3%. Further, for the same reason, the content of Ga₂O₃ is preferably regulated to 0 to 3%.

Li₂O, Na₂O, K₂O, and Cs₂O, which are alkali metal oxides, are components which lower the softening point of the glass, but each have a function of promoting the devitrification of the glass at the time of melting, and hence, the total amount of those components is preferably 2% or less.

P₂O₅ is a component which suppresses the devitrification of the glass at the time of melting, but when the content of P₂O₅ is large, the glass easily undergoes phase separation at the time of melting. Therefore, the content of P₂O₅ is preferably 1% or less.

MoO₃+La₂O₃+Y₂O₃ (total amount of MoO, La₂O₃, and Y₂O₃) has an effect of suppressing the phase separation of the glass at the time of melting, but when the total amount of those components is large, the softening point of the glass becomes too high, and it becomes difficult for the glass to flow at temperatures of 600°C or lower. Therefore, the total amount of those components is preferably 3% or less.

As mentioned above, the glass composition for sealing the present invention is preferably substantially free of PbO from the environmental requirements. Further, when PbO is contained in the glass composition, Pb²⁻ is diffused into the glass, and hence, the electrical insulating properties may deteriorate.

It should be noted that, in the glass composition for sealing of the present invention, as a glass composition, components other than the above components may be introduced up to 10%.

In the above glass composition for sealing, it is possible to appropriately select the suitable content range for each of the components to thereby obtain a preferable glass composition range. Specifically, it is preferred that the glass composition for sealing include, as a glass composition range, 60 to less than 77% of Bi₂O₃, 6 to 15% of B₂O₃, 5 to 15% of ZnO, 1 to 9% of BaO, 0 to 5% of CuO, 0 to 2% of Fe₂O₃, 1 to 5% of SiO₂ (provided that 1% is excluded), and 0 to 5% of Al₂O₃, and that the glass composition for sealing preferably have a value of ZnO/BaO in a molar ratio of larger than 3. In such a manner, the thermal expansion coefficient of the glass may be securely lowered.

In the glass composition for sealing of the present invention, the thermal expansion coefficient in a temperature range of 30 to 300°C is 100×10⁻⁷/°c or less, preferably 98×10⁻⁷/°C or less, and more preferably 96×10⁻⁷/°C or less. When the thermal expansion coefficient in a temperature range of 30 to 300°C is larger than 100×10⁻⁷/°C, the thermal expansion coefficient of the sealing material does not lower sufficiently even when the refractory filler powder is added thereto, and hence, it becomes difficult to seal boron silicate glass or the like having a small thermal expansion coefficient. The lower limit value of the thermal expansion coefficient in a temperature range of 30 to 300°C is not particularly limited, but in general, when the thermal expansion coefficient of the glass is small, the softening point of the glass easily rises. Therefore, the thermal expansion coefficient in a temperature range of 30 to 300°C is set, as a guide, to 65×10⁻⁷/°C or more.

In the glass composition for sealing of the present invention, the softening point is preferably 550°C or lower, more preferably 520°C or lower, still more preferably 500°C or lower, and particularly preferably 480°C or lower. When the softening point is higher than 550°C, it becomes difficult for the glass to flow by firing at 600°C or lower, and hence, desired sealing strength may not be ensured.

The glass composition for sealing of the present invention is preferably noncrystalline (amorphous). In such a manner, a crystal hardly deposits on the surface of the glass by firing at 600°C or lower, that is, the glass is hardly devitrified before the glass begins to flow, and hence, a desired flowability is easily ensured. Further, when the glass composition for sealing is noncrystalline, the sealing strength increases, and hence, air-tightness reliability of the high intensity discharged lamp and the like is easily ensured.

In the case where the difference between the thermal expansion coefficient of the glass composition for sealing of the present invention and that of the article to be sealed is appropriate, the glass composition for sealing may be processed into glass powder by using a pulverizer such as a ball mill, and may be used as it is as a sealing material.

Further, in the case of sealing a material in which the thermal expansion coefficient does not match with that of the glass composition for sealing, for example, boron silicate glass (40 to 60×10⁻⁷/°C), it is important that the thermal expansion coefficient of the glass powder formed of the glass composition for sealing of the present invention be matched with that of the article to be sealed, by adding refractory filler powder to the glass powder. The above process is performed for minimizing the strain applied to the sealed part (sealed layer) and the article to be sealed, to thereby prevent breakage due to stress at the sealed part and the article to be sealed. Further, the refractory filler powder may be added to the glass powder, for example, for improving the mechanical strength, in addition to for adjusting the thermal expansion coefficient.

When the refractory filler powder is added to the glass powder, the mixing ratio of the glass powder to the refractory filler powder is preferably 35 to 100 vol% of the glass powder to 0 to 65 vol% of the refractory filler powder, more preferably 35 to 95 vol% of the glass powder to 5 to 65 vol% of the refractory filler powder, still more preferably 55 to 75 vol% of the glass powder to 25 to 45 vol% of the refractory filler powder, and particularly preferably 40 to 60 vol% of the glass powder to 40 to 60 vol% of the refractory filler powder. The reason for regulating the ratio to the above is that, when the ratio of the refractory filler powder is less than 5 vol%, the thermal expansion coefficient of the glass composition for sealing hardly matches with that of an article to be sealed, and hence, the sealed part and the article to be sealed are easily broken due to residual stress. When the ratio of the refractory filler powder is more than 65 vol%, the content of the glass powder becomes relatively small, and hence, the flowability of the sealing material deteriorates and it becomes difficult to ensure air-tightness reliability of the high intensity discharged lamp and the like.

It is required for the refractory filler powder to have low reactivity to such an extent that, when the refractory filler powder is added to the glass powder, the thermal stability is not lowered, and it is also required for the refractory filler powder to have a low thermal expansion coefficient and high mechanical strength. Further, as the refractory filler powder, it is preferred to use a refractory filler powder substantially free of PbO from the environmental requirements. From such a viewpoint, as the refractory filler powder, there can be used willemite, zircon, tin oxide, cordierite, β-eucryptite, quartz glass, alumina, mullite, alumina-silica type ceramics, zirconium phosphate compounds (such as zirconium phosphate, zirconium phosphotungstate, and the like), zirconium tungstate, a crystalline compound having a basic structure of an NZP type crystal (such as NbZr(PO₄)₃) and [AB₂(MO₄)₃]), where A represents Li, Na, K, Mg, Ca, Sr, Ba, Zn, Cu, Ni, Mn, or the like, B represents Zr, Ti, Sn, Nb, Al, Sc, Y, or the like, and M represents P, Si, W, Mo, or the like, and a solid solution thereof. As the refractory filler powder, cordierite is particularly preferred, because cordierite is highly effective in suppressing the devitrification of bismuth-based glass, is low in thermal expansion, and has excellent mechanical strength.

Further, when the refractory filler powder is coated with alumina, zinc oxide, zircon, titania, zirconia, or the like, the reaction between the glass powder and the refractory filler powder may be adjusted.

The glass composition for sealing of the present invention is preferably used for sealing a lamp, more preferably used for sealing a high intensity discharged lamp, and still more preferably used for sealing a high pressure metal halide lamp. When a lamp is sealed by using the glass composition for sealing of the present invention, the production process may be simplified and the air-tightness reliability may be ensured.

The glass composition for sealing of the present invention has a thermal expansion coefficient of 100×10⁻⁷/°C or less, so the thermal expansion coefficient of the glass composition for sealing may be matched with that of boron silicate glass or the like when an appropriate amount of the refractory filler powder is added to the glass powder formed of the glass composition for sealing. Further, the glass composition for sealing of the present invention flows satisfactorily at temperatures of 600°C or lower owing to the low melting point thereof, and is hardly devitrified at temperatures of 600°C or lower, because the glass composition for sealing is also excellent in devitrification resistance. In addition, the glass composition for sealing of the present invention may have a composition being substantially free of PbO, and hence may satisfy environmental requirements in recent years. Accordingly, the above-mentioned properties (1) to (4), which are required for the sealing material, may be satisfied when the glass composition for sealing of the present invention is used, and hence, the glass composition for sealing may satisfactorily seal an outer tube and a lamp base of a high intensity discharged lamp. It should be noted that the glass composition for sealing of the present invention is also suitable for sealing a current supply member and the lamp base, and for sealing an exhaust tube and the lamp base.

In the case where the refractory filler powder is added to the glass powder formed of the glass composition for sealing of the present invention and the resultant is used as a sealing material, the softening point of the sealing material is preferably 570°C or lower, more preferably 540°C or lower, still more preferably 500°C or lower, and particularly preferably 480°C or lower. When the softening point of the sealing material is higher than 570°C, it becomes difficult for the sealing material to flow by firing at 600°C or lower, and hence, desired sealing strength may not be ensured. Here, the term "softening point" refers to a value measured by a macro-type DTA apparatus. Here, DTA is performed in the atmosphere, has a rate of temperature rise of 10°C/min, and initiates measurement from room temperature.

As described above, in the production process of a high intensity discharged lamp or the like, the sealing material is mixed with a vehicle, and is formed into a paste to be used for coating an article to be sealed, or is processed into a tablet to be fixed to an article to be sealed. In those respects, the same applies for the sealing material using the glass composition for sealing of the present invention. The same respects as described above correspond to all of: the coating with the glass paste; the kind and addition amount of the organic resin for adjusting the viscosity of the glass paste; and the kind and addition amount of the organic solvent for making the sealing material into a paste form.

Further, in the case where the refractory filler powder is added to the glass powder formed of the glass composition for sealing of the present invention and the resultant is used as a sealing material, the sealing material is preferably processed into a sealing tablet. In such a manner, the production process of a high intensity discharged lamp or the like may be simplified. Here, the shape of the sealing tablet is not particularly limited, and a ring shape is preferred considering fixing the high intensity discharged lamp or the like to a lamp base. The same respects as described above correspond to all of: the production process of the sealing tablet; the kind and addition amount of the organic resin for binding and granulating the powders; and the kind and addition amount of the organic solvent added at the time of granulating the sealing material.

Further, from the above-mentioned reasons, the glass composition for sealing of the present invention is preferably used for sealing an organic EL display. In this case, the thermal expansion coefficient of the sealing material, which is obtained by adding the refractory filler powder to the glass powder formed of the glass composition for sealing of the present invention, is preferably regulated to less than 65×10⁻⁷/°C and more preferably regulated to less than 60×0⁻⁷/°C from the above-mentioned reasons.
Hereinafter, the present invention is described in detail by way of examples.

### Example 1

Tables 1 to 4 show sealing materials (Sample Nos. 1 to 21) according to examples of the present invention, and sealing materials (Sample Nos. 22 to 24) according to comparative examples of the present invention.

**[Table 1]**

| | | | Example | | | | | |
|---|---|---|---|---|---|---|---|---|
| | | | 1 | 2 | 3 | 4 | 5 | 6 |
| Glass powder | Glass composition (mass%) | Bi₂O₃ | 71.6 | 71.5 | 71.8 | 72.4 | 71.5 | 71.3 |
| | | B₂O₃ | 9.4 | 8.7 | 10.1 | 10.2 | 10.8 | 9.3 |
| | | ZnO | 8.9 | 9.7 | 8.0 | 8.9 | 8.8 | 10.5 |
| | | BaO | 4.2 | 4.2 | 4.2 | 2.6 | 4.2 | 4.2 |
| | | CuO | 2.1 | 2.1 | 2.1 | 2.1 | 2.1 | 2.1 |
| | | Fe₂O₃ | 0.5 | 0.5 | 0.5 | 0.5 | 0.5 | 0.5 |
| | | SiO₂ | 3.3 | 3.3 | 3.3 | 3.3 | 2.1 | 2.1 |
| | | Molar ratio ZnO/BaO | 4.0 | 4.0 | 3.6 | 6.4 | 4.0 | 4.8 |
| | Thermal expansion coefficient_{30 to 300°C} (×10⁻⁷/°C) | | 96.5 | 95.5 | 95.0 | 94.0 | 94.0 | 96.5 |
| | Density (g/cm³) | | 6.47 | 6.52 | 6.42 | 6.42 | 6.44 | 6.53 |
| | Glass transition point (°C) | | 401 | 397 | 406 | 410 | 400 | 392 |
| | Softening point (°C) | | 474 | 468 | 477 | 484 | 473 | 463 |
| Mixing ratio (vol%) | Glass powder | | 55 | 50 | 50 | 50 | 55 | 55 |
| | Refractory filler powder | | CDR 45 | CDR 50 | CDR 50 | CDR 50 | CDR 45 | CDR 45 |
| Sealing material | Thermal expansion coefficient_{30 to 300°C} (×10⁻⁷/°C) | | 54.2 | 49.0 | 48.8 | 48.4 | 52.9 | 54.2 |
| | Softening point (°C) | | 541 | 547 | 557 | 563 | 539 | 533 |
| | Flowing diameter (mm) | | 19.5 | 19.2 | 18.9 | 18.4 | 19.5 | 19.5 |
| | Devitrification resistance | | ○ | ○ | ○ | ○ | ○ | ○ |

**[Table 2]**

| | | | Example | | | | | |
|---|---|---|---|---|---|---|---|---|
| | | | 7 | 8 | 9 | 10 | 11 | 12 |
| Glass powder | Glass composition (mass%) | Bi₂O₃ | 75.9 | 62.2 | 61.6 | 75.6 | 70.1 | 70.2 |
| | | B₂O₃ | 8.7 | 12.3 | 12.4 | 7.4 | 11.1 | 10.0 |
| | | ZnO | 9.4 | 14.6 | 14.5 | 11.0 | 13.0 | 14.3 |
| | | BaO | 1.7 | 7.6 | 7.5 | 1.0 | 1.9 | 1.9 |
| | | CuO | 1.9 | 0.7 | 0.7 | 1.6 | 1.0 | 0.7 |
| | | Fe₂O₃ | 0.5 | 0.3 | 0.3 | 0.5 | 0.3 | 0.3 |
| | | SiO₂ | 1.9 | 2.3 | 1.2 | 1.9 | 1.1 | 1.1 |
| | | Al₂O₃ | - | - | 1.8 | 1.0 | 1.5 | 1.5 |
| | | Molar ratio ZnO/BaO | 18.9 | 3.6 | 3.6 | 21.2 | 12.8 | 14.1 |
| | Thermal expansion coefficient _{30 to 300°C} (×10⁻⁷/°C) | | 95.5 | 94.0 | 90.0 | 97.0 | 90.0 | 91.0 |
| | Density (g/cm³) | | 6.76 | 6.00 | 5.91 | 6.76 | 6.27 | 6.37 |
| | Glass transition point (°C) | | 390 | 423 | 424 | 390 | 415 | 397 |
| | Softening point (°C) | | 457 | 497 | 493 | 458 | 483 | 473 |
| Mixing ratio (vol%) | Glass powder | | 50 | 50 | 57 | 45 | 50 | 55 |
| | Refractory filler powder | | CDR 50 | CDR 50 | CDR 43 | CDR 55 | CDR 45 Zircon 5 | CDR 40 SnO₂ 5 |
| Sealing material | Thermal expansion coefficient_{30 to 300°C} (×10⁻⁷/°C) | | 49.0 | 47.7 | 52.4 | 45.0 | 45.1 | 53.2 |
| | Softening point (°C) | | 535 | 568 | 553 | 569 | 558 | 541 |
| | Flowing diameter (mm) | | 19.4 | 18.1 | 19.0 | 18.0 | 18.9 | 19.4 |
| | Devitrification resistance | | ○ | ○ | ○ | ○ | ○ | ○ |

**[Table 3]**

| | | | Example | | | | | |
|---|---|---|---|---|---|---|---|---|
| | | | 13 | 14 | 15 | 16 | 17 | 18 |
| Glass powder | Glass composition (mass%) | Bi₂O₃ | 66.7 | 65.0 | 75.9 | 75.9 | 61.6 | 75.9 |
| | | B₂O₃ | 11.0 | 10.0 | 8.7 | 8.7 | 12.4 | 8.7 |
| | | ZnO | 11.3 | 13.1 | 9.4 | 9.4 | 14.5 | 9.4 |
| | | BaO | 5.5 | 5.5 | 1.7 | 1.7 | 7.5 | 1.7 |
| | | CuO | | 2.0 | 1.9 | 1.9 | 0.7 | 1.9 |
| | | Fe₂O₃ | 0.7 | | 0.5 | 0.5 | 0.3 | 0.5 |
| | | SiO₂ | 4.0 | 3.0 | 1.9 | 1.9 | 1.2 | 1.9 |
| | | Al₂O₃ | | 1.0 | | | 1.8 | |
| | | CeO₂ | 0.5 | 0.2 | | | | |
| | | Sb₂O₃ | 0.3 | 0.2 | | | | |
| | | Molar ratio ZnO/BaO | 3.87 | 4.49 | 18.9 | 18.9 | 3.6 | 18.9 |
| | Thermal expansion coefficient _{30 to 300°C} (×10⁻⁷/°C) | | 92.5 | 92.0 | 95.5 | 95.5 | 90.0 | 95.5 |
| | Density (g/cm³) | | 6.31 | 6.28 | 6.76 | 6.76 | 5.91 | 6.76 |
| | Glass transition point (°C) | | 421 | 415 | 390 | 390 | 424 | 390 |
| | Softening point (°C) | | 485 | 478 | 457 | 457 | 493 | 457 |
| Mixing ratio (vol%) | Glass powder | | 50 | 50 | 60 | 45 | 70 | 60 |
| | Refractory filler powder | | CDR 50 | CDR 50 | CDR 40 | CDR 55 | CDR 30 | CDR 40 |
| Sealing material | Thermal expansion coefficient_{30 to 300°C} (×10⁻⁷/°C) | | 47.5 | 47.3 | 58.3 | 44.4 | 57.7 | 59.0 |
| | Softening point (°C) | | 563 | 561 | 503 | 569 | 531 | 500 |
| | Flowing diameter (mm) | | 18.5 | 18.6 | 20.3 | 18.1 | 19.5 | 20.8 |
| | Devitrification resistance | | ○ | ○ | ○ | ○ | ○ | ○ |

**[Table 4]**

| | | | Example | | | Comparative Example | | |
|---|---|---|---|---|---|---|---|---|
| | | | 19 | 20 | 21 | 22 | 23 | 24 |
| Glass powder | Glass composition (mass%) | Bi₂O₃ | 75.9 | 70.1 | 75.9 | 77.1 | 69.4 | 69.4 |
| | | B₂O₃ | 8.7 | 11.1 | 8.8 | 8.6 | 8.1 | 8.1 |
| | | ZnO | 9.4 | 13.0 | 9.6 | 4.9 | 17.0 | 17.0 |
| | | BaO | 1.7 | 1.9 | | 3.5 | 1.0 | 1.0 |
| | | CuO | 1.9 | 1.0 | 3.1 | 2.1 | 2.0 | 2.0 |
| | | Fe₂O₃ | 0.5 | 0.5 | 0.7 | 0.5 | 0.5 | 0.5 |
| | | SiO₂ | - | 1.1 | 1.9 | 3.3 | 2.0 | 2.0 |
| | | Al₂O₃ | 1.9 | 1.5 | | | | |
| | | CeO₂ | - | - | - | - | - | - |
| | | Sb₂O₃ | - | - | - | - | - | - |
| | | Molar ratio ZnO/BaO | 10.4 | 12.8 | ∞ | 2.6 | 32.1 | 32.1 |
| | Thermal expansion coefficient _{30 to 300°C} (×10⁻⁷/°C) | | 96.7 | 90.0 | 94.1 | 108.5 | - | - |
| | Density (g/cm³) | | 6.85 | 6.27 | 6.71 | 6.81 | 6.43 | 6.43 |
| | Glass transition point (°C) | | 387 | 415 | 395 | 385 | 391 | 391 |
| | Softening point (°C) | | 453 | 483 | 464 | 458 | 463 | 463 |
| Mixing ratio (vol%) | Glass powder | | 50 | 75 | 60 | 80 | 70 | 60 |
| | Refractory filler powder | | CDR 50 | ZW 25 | Willemi te 40 | CDR 20 | Willemi te 30 | CDR 40 |
| Sealing material | Thermal expansion coefficient_{30 to 300°C} (×10⁻⁷/°C) | | 49.2 | 43.1 | 58.2 | 87.3 | - | - |
| | Softening point (°C) | | 531 | 525 | 506 | 491 | 487 | 492 |
| | Flowing diameter (mm) | | 19.5 | 18.0 | 20.1 | 20.8 | 20.9 | 18.0 |
| | Devitrification resistance | | ○ | △ | ○ | ○ | × | × |

Each of the samples shown in Tables 1 to 4 was prepared as follows.

First, a glass batch in which raw materials such as various oxides and carbonates were mixed so as to have a glass composition shown in the tables was prepared, and was then loaded into a platinum crucible and melted at 1,000 to 1,200°C for 2 hours. Next, a part of the molten glass, which serves as a sample for TMA and density measurement, was poured into a die made of stainless steel, and the remaining molten glass was formed into a flaky shape with a water cooled roller. Finally, the flaky glass was pulverized with a ball mill and the pulverized glass was then allowed to pass through a sieve having a mesh of 105. As a result, each glass powder sample having an average particle size D₅₀ of 10 µm was obtained.

As the refractory filler powder, there were used cordierite powder (written as CDR in the tables), zircon powder, tin oxide powder (written as SnO₂ in the tables), zirconium tungstate powder (written as ZW in the tables), and willemite powder, each having an average particle size D₅₀ of 10 µm.

Those samples were used to evaluate the thermal expansion coefficient, the density, the glass transition point, the softening point, the flowing diameter, and the devitrification resistance.

The thermal expansion coefficient was measured in a temperature range of 30 to 300°C by a TMA apparatus using each sample which was sintered and then processed into a size of 5ϕ×20 mm. In the same way, the glass transition point was measured by a TMA apparatus using each sample which was sintered and then processed into a size of 5ϕ×20 mm.

The density was measured by a known Archimedes method.

The softening point was determined by a DTA apparatus using each powder sample.

The flowing diameter was evaluated by measuring the diameter of a fired button, which was obtained by dry pressing the powder, whose weight is equivalent to the absolute specific gravity of the sealing material, by using a die into a button shape having an outer diameter of 20 mm, charging the button sample into an air-flow type heat-treating furnace, raising the temperature at a rate of 10°C/min in the air, retaining the button sample at 560°C for 10 minutes, and then lowering the temperature at a rate of 10°C/min to room temperature. It should be noted that the flowing diameter of 18 mm or more means that the flowability is satisfactory.

The devitrification resistance was evaluated as follows. First, each sample and a vehicle (acrylic resin-containing α-terpineol) were kneaded homogeneously by a three roll mill into a paste, and the paste was used for coating the end part of a boron silicate glass substrate (40 mm long × 40 mm wide × 2.8 mm thick, thermal expansion coefficient of 50×10⁻⁷/°C), which is an article to be sealed of each sample, in a line shape (40 mm long × 3 mm wide × 1.5 mm thick). The resultant was dried in a dry oven at 150°C for 10 minutes. Next, the temperature was raised from room temperature at a rate of 10°C/min and the substrate was fired at 560°C for 10 minutes, and thereafter, the temperature was lowered at a rate of 10°C/min to room temperature. Finally, the surface of the obtained fired body was observed, and the case where a crystal was not observed on the surface was evaluated as "o", the case where a small amount of crystal was observed on the surface was evaluated as "Δ", and the case where crystal was observed on the entire surface was evaluated as "×".

As is clear from Tables 1 to 4, Sample Nos. 1 to 21 each had a thermal expansion coefficient of 43.1 to 59.0×10⁻⁷/°C, which matched with the thermal expansion coefficient of the boron silicate glass. It should be noted that, in the evaluation of the devitrification resistance, a stress value remaining on the boron silicate glass substrate was an appropriate value, and a crack was not generated on the boron silicate glass substrate. Further, Sample Nos. 1 to 21 each had a softening point of 503 to 569°C and a flowing diameter of 18 mm or more, and in addition had satisfactory devitrification resistance. As is clear from the above results, each of Sample Nos. 1 to 21 is a suitable sealing material for sealing a boron silicate glass substrate (thermal expansion coefficient of 40 to 60×10⁻⁷/°C) or the like, and is suitable for sealing an outer tube and a lamp base of a high intensity discharged lamp or the like.

As is clear from Table 3, Sample No. 22 according to a comparative example of the present invention had a thermal expansion coefficient in a temperature range of 30 to 300°C of larger than 70×10⁻⁷/°C, and the thermal expansion coefficient of Sample No. 22 did not match with that of the article to be sealed in the case where the article to be sealed had a low expansion coefficient. Therefore, it is considered that it is difficult to use Sample No. 22 as the sealing material. Further, Sample Nos. 23 and 24 according to comparative examples of the present invention each had a large content of ZnO, and hence, the devitrification resistance of each of Sample Nos. 23 and 24 was evaluated as poor. As is clear from the above results, each of Sample Nos. 22 to 24 is not suitable for sealing an outer tube and a lamp base of a high intensity discharged lamp or the like.

### Example 2

Tables 5 to 7 show glass compositions for sealing (Sample Nos. 1 to 16) according to examples of the present invention, and glass compositions for sealing (Sample Nos. 17 and 18) according to comparative examples of the present invention.

**[Table 5]**

| | | Example | | | | | |
|---|---|---|---|---|---|---|---|
| | | 1 | 2 | 3 | 4 | 5 | 6 |
| Glass composition (mass%) | Bi₂O₃ | 71.6 | 71.5 | 71.8 | 72.4 | 71.5 | 71.3 |
| | B₂O₃ | 9.4 | 8.7 | 10.1 | 10.2 | 10.8 | 9.3 |
| | ZnO | 8.9 | 9.7 | 8.0 | 8.9 | 8.8 | 10.5 |
| | BaO | 4.2 | 4.2 | 4.2 | 2.6 | 4.2 | 4.2 |
| | CuO | 2.1 | 2.1 | 2.1 | 2.1 | 2.1 | 2.1 |
| | Fe₂O₃ | 0.5 | 0.5 | 0.5 | 0.5 | 0.5 | 0.5 |
| | SiO₂ | 3.3 | 3.3 | 3.3 | 3.3 | 2.1 | 2.1 |
| Molar ratio ZnO/BaO | | 4.0 | 4.0 | 3.6 | 6.4 | 4.0 | 4.8 |
| Thermal expansion coefficient_{30 to 300°C} (×10⁻⁷/°C) | | 96.5 | 95.5 | 95.0 | 94.0 | 94.0 | 96.5 |
| Density (g/cm³) | | 6.47 | 6.52 | 6.42 | 6.42 | 6.44 | 6.53 |
| Glass transition point (°C) | | 401 | 397 | 406 | 410 | 400 | 392 |
| Softening point (°C) | | 474 | 468 | 477 | 484 | 473 | 463 |
| Devitrification resistance | | ○ | ○ | ○ | ○ | ○ | ○ |

**[Table 6]**

| | | Example | | | | | |
|---|---|---|---|---|---|---|---|
| | | 7 | 8 | 9 | 10 | 11 | 12 |
| Glass composition (mass%) | Bi₂O₃ | 75.9 | 62.2 | 61.6 | 75.6 | 70.1 | 70.2 |
| | B₂O₃ | 8.7 | 12.3 | 12.4 | 7.4 | 11.1 | 10.0 |
| | ZnO | 9.4 | 14.6 | 14.5 | 11.0 | 13.0 | 14.3 |
| | BaO | 1.7 | 7.6 | 7.5 | 1.0 | 1.9 | 1.9 |
| | CuO | 1.9 | 0.7 | 0.7 | 1.6 | 1.0 | 0.7 |
| | Fe₂O₃ | 0.5 | 0.3 | 0.3 | 0.5 | 0.3 | 0.3 |
| | SiO₂ | 1.9 | 2.3 | 1.2 | 1.9 | 1.1 | 1.1 |
| | Al₂O₃ | | | 1.8 | 1.0 | 1.5 | 1.5 |
| Molar ratio ZnO/BaO | | 18.9 | 3.6 | 3.6 | 21.2 | 12.8 | 14.1 |
| Thermal expansion coefficient_{30 to 300°C} (×10⁻⁷/°C) | | 95.5 | 94.0 | 90.0 | 97.0 | 90.0 | 91.0 |
| Density (g/cm³) | | 6.76 | 6.00 | 5.91 | 6.76 | 6.27 | 6.37 |
| Glass transition point (°C) | | 390 | 423 | 424 | 390 | 415 | 397 |
| Softening point (°C) | | 457 | 497 | 493 | 458 | 483 | 473 |
| Devitrification resistance | | ○ | ○ | ○ | ○ | ○ | ○ |

**[Table 7]**

| | | Example | | | | Comparative Example | |
|---|---|---|---|---|---|---|---|
| | | 13 | 14 | 15 | 16 | 17 | 18 |
| Glass composition (mass%) | Bi₂O₃ | 66.7 | 65.0 | 75.9 | 74.1 | 77.1 | 69.4 |
| | B₂O₃ | 11.0 | 10.0 | 8.8 | 13.1 | 8.6 | 8.1 |
| | ZnO | 11.3 | 13.1 | 9.6 | 4.0 | 4.9 | 17.0 |
| | BaO | 5.5 | 5.5 | - | 1.9 | 3.5 | 1.0 |
| | CuO | - | 2.0 | 3.1 | 2.3 | 2.1 | 2.0 |
| | Fe₂O₃ | 0.7 | | 0.7 | 0.7 | 0.5 | 0.5 |
| | SiO₂ | 4.0 | 3.0 | 1.9 | 1.9 | 3.3 | 2.0 |
| | Al₂O₃ | - | 1.0 | - | 1.5 | - | - |
| | CeO₂ | 0.5 | 0.2 | - | - | - | - |
| | Sb₂O₃ | 0.3 | 0.2 | | 0.5 | | |
| Molar ratio ZnO/BaO | | 3.87 | 4.49 | ∞ | 3.96 | 2.6 | 32.1 |
| Thermal expansion coefficient_{30 to 300°C} (×10⁻⁷/°C) | | 92.5 | 92.0 | 94.1 | 92.8 | 108.5 | - |
| Density (g/cm³) | | 6.31 | 6.28 | 6.71 | 6.49 | 6.81 | 6.43 |
| Glass transition point (°C) | | 421 | 415 | 395 | 417 | 385 | 391 |
| Softening point (°C) | | 485 | 478 | 464 | 486 | 458 | 463 |
| Devitrification resistance | | ○ | ○ | △ | ○ | ○ | × |

Each of the samples shown in Tables 5 to 7 was prepared as follows.

First, a glass batch in which raw materials such as various oxides and carbonates were mixed so as to have a glass composition shown in the tables was prepared, and was then loaded into a platinum crucible and melted at 1,000 to 1,200°C for 2 hours. Next, a part of the molten glass, which serves as a sample for TMA, was poured into a die made of stainless steel, and the remaining molten glass was formed into a flaky shape with a water cooled roller. Finally, the flaky glass was pulverized with a ball mill and the pulverized glass was then allowed to pass through a sieve having a mesh of 105. As a result, each powder sample having an average particle size D₅₀ of 10 µm was obtained.

Those samples were used to evaluate the thermal expansion coefficient, the density, the glass transition point, the softening point, and the devitrification resistance.

The thermal expansion coefficient was measured in a temperature range of 30 to 300°C by a TMA apparatus.

The density was measured by a known Archimedes method.

The glass transition point was determined by a TMA apparatus. The softening point was determined by a DTA apparatus using each powder sample.

The devitrification resistance was evaluated as follows. First, each sample and a vehicle (acrylic resin-containing α-terpineol) were kneaded homogeneously by a three roll mill into a paste, and the paste was used for coating the end part of a high distortion point glass substrate (40 mm long × 40 mm wide × 2.8 mm thick), which is an article to be sealed of each sample, in a line shape (40 mm long × 3 mm wide × 1.5 mm thick). The resultant was dried in a dry oven at 150°C for 10 minutes. Next, the temperature was raised from room temperature at a rate of 10°C/min and the high distortion point glass substrate was fired at 550°C for 10 minutes, and thereafter, the temperature was lowered at a rate of 10°C/min to room temperature. Finally, the surface of the obtained fired body was observed, and the case where a crystal was not observed on the surface was evaluated as "○", the case where a small amount of crystal was observed on the surface was evaluated as "△", and the case where crystal was observed on the entire surface was evaluated as "×".

As is clear from Tables 5 to 7, Sample Nos. 1 to 16 according to examples of the present invention each had a thermal expansion coefficient in a temperature range of 30 to 300°C of 90.0 to 97.0×10⁻⁷/°C, a density of 5.91 to 6.76 g/cm³, a glass transition point of 390 to 424°C, and a softening point of 457 to 497°C, and in addition, the evaluation of the devitrification resistance for each of those samples was satisfactory.

As is clear from Table 7, Sample No. 17 according to a comparative example of the present invention had a thermal expansion coefficient in a temperature range of 30 to 300°C of larger than 100×10⁻⁷/°C, and it is considered that it is difficult to use Sample No. 17 as the sealing material in the case where the article to be sealed had a low expansion coefficient. Further, Sample No. 18 according to a comparative example of the present invention had a large content of ZnO, and hence, the devitrification resistance of Sample No. 18 was evaluated as poor.

Each of sealing materials (Sample Nos. A to D) was prepared by mixing each of Sample Nos. 7, 11, and 12 with refractory filler powder at ratios shown in Table 8.

**[Table 8]**

| | | Example | | | |
|---|---|---|---|---|---|
| | | A | B | C | D |
| Mixing ratio (vol%) | Glass powder | No. 7 (50.0) | No. 7 (45.0) | No. 11 (50.0) | No. 12 (75.0) |
| | Refractory filler powder | Cordierite (50.0) | Cordierite (55.0) | Cordierite (50.0) | Zirconium tungstate 25.0 |
| Thermal expansion coefficient_{30 to 300°C} (×10⁻⁷/°C) | | 49.0 | 44.6 | 45.1 | 44.5 |
| Softening point | | 535 | 556 | 558 | 517 |
| Flowing diameter (mm) | | 19.4 | 18.7 | 18.9 | 18.1 |
| Devitrification condition | | ○ | ○ | ○ | △ |

As the refractory filler powder, there were used cordierite powder and zirconium tungstate powder. It should be noted that the average particle size D₅₀ of the refractory filler powder was set to 10 µm.

Those samples were used to evaluate the thermal expansion coefficient, the softening point, the flowing diameter, and the devitrification resistance.

The thermal expansion coefficient was measured in a temperature range of 30 to 300°C by a TMA apparatus using each sample which was sintered and then processed into a size of 5ϕ×20 mm.

The softening point was determined by a DTA apparatus using each powder sample.

The flowing diameter was evaluated by measuring the diameter of a fired button, which was obtained by dry pressing the powder, whose weight is equivalent to the absolute specific gravity of the sealing material, by using a die into a button shape having an outer diameter of 20 mm, charging the button sample into an air-flow type heat-treating furnace, raising the temperature at a rate of 10°C/min in the air, retaining the button sample at 560°C for 10 minutes, and then lowering the temperature at a rate of 10°C/min to room temperature. It should be noted that the flowing diameter of 18 mm or more means that the flowability is satisfactory.

The devitrification resistance was evaluated as follows. First, each sample and a vehicle (acrylic resin-containing α-terpineol) were kneaded homogeneously by a three roll mill into a paste, and the paste was used for coating the end part of a boron silicate glass substrate (40 mm long × 40 mm wide × 2.8 mm thick, thermal expansion coefficient of 50×10⁻⁷/°C), which is an article to be sealed of each sample, in a line shape (40 mm long × 3 mm wide × 1.5 mm thick). The resultant was dried in a dry oven at 150°C for 10 minutes. Next, the temperature was raised from room temperature at a rate of 10°C/min and the substrate was fired at 550°C for 10 minutes, and thereafter, the temperature was lowered at a rate of 10°C/min to room temperature. Finally, the surface of the obtained fired body was observed, and the case where a crystal was not observed on the surface was evaluated as "○", the case where a small amount of crystal was observed on the surface was evaluated as "△", and the case where crystal was observed on the surface was evaluated as "×".

As is clear from Table 8, Sample Nos. A to D each had a thermal expansion coefficient of 30 to 300°C of 44.5 to 49.0×10⁻⁷/°C, which matched with the thermal expansion coefficient of the boron silicate glass. It should be noted that, in the evaluation of the devitrification resistance, a stress value remaining on the boron silicate glass substrate was an appropriate value, and a crack was not generated on the boron silicate glass substrate. Further, Sample Nos. A to D each had a softening point of 517 to 558°C and a flowing diameter of 18 mm or more, and in addition had a satisfactory devitrification resistance.

As is clear from the above results, each of Sample Nos. A to D is a suitable sealing material for sealing a boron silicate glass substrate (thermal expansion coefficient of 40 to 60×10⁻⁷/°C) or the like, and is suitable for sealing an outer tube and a lamp base of a high intensity discharged lamp or the like.

### Industrial Applicability

The sealing material of the present invention is suitable for sealing a lamp such as a high intensity discharged lamp, and specifically, is suitable for sealing an outer tube and a lamp base of a high intensity discharged lamp. The high intensity discharged lamp may be used for a headlight for a vehicle, an interior illumination lamp, or the like.

In the description of the present invention, the application of the sealing material of the present invention was focused on the high intensity discharged lamp, but is not limited thereto. That is, the sealing material of the present invention may also be used for, in the case where the thermal expansion coefficient of the sealing material matches with that of the article to be sealed, sealing: display apparatuses such as a plasma display panel (PDP), field emission displays (FED) of various types having various electron emission devices, a vacuum fluorescent display (VFD), and an organic EL display; a piezoelectric oscillation device such as a crystal oscillator; a ceramic package such as an IC package; and the like.

### Brief Description of the Drawing

FIG. 1 is a cross-sectional conceptual diagram for describing a structure of a high pressure metal halide lamp.

### Description of Symbols

- 1: high pressure metal halide lamp
- 2: outer tube
- 3: current supply member (pin)
- 4: sealing material
- 5: lamp base
- 6: exhaust tube

## Claims

1. A sealing material, comprising:
a glass powder; and
a refractory filler powder,
wherein:
(1) the sealing material comprises, in terms of vol%, 35 to 75% of the glass powder and 25 to 65% of the refractory filler powder;
(2) the sealing material has a thermal expansion coefficient of less than 70×10⁻⁷/°C; and
(3) the glass powder comprises, as a glass composition, in terms of mass%, 55 to 85% of Bi₂O₃, 5 to 20% of B₂O₃, 1 to 15% of ZnO, and 0 to 7% of SiO₂.

2. The sealing material according to claim 1, wherein the thermal expansion coefficient is less than 65×10⁻⁷/°C.

3. The sealing material according to claim 1, wherein the thermal expansion coefficient is less than 60×10⁻⁷/°C.

4. The sealing material according to any one of claims 1 to 3, wherein the refractory filler powder is substantially free of ZnO and/or P₂O₅.

5. The sealing material according to any one of claims 1 to 3, wherein the refractory filler powder comprises cordierite.

6. The sealing material according to any one of claims 1 to 5, wherein:
the glass powder further comprises 1 to 10 mass% of BaO as a glass composition; and
the glass powder has a value of ZnO/BaO in a molar ratio of larger than 3.

7. The sealing material according to any one of claims 1 to 5, wherein:
the glass powder comprises, as a glass composition, in terms of mass%, 60 to less than 77% of Bi₂O₃, 6 to 15% of B₂O₃, 5 to 15% of ZnO, 1 to 9% of BaO, 0 to 5% of CuO, 0 to 2% of Fe₂O₃, 1 to 5% of SiO₂ provided that 1% is excluded, and 0 to 5% of Al₂O₃; and
the glass powder has a value of ZnO/BaO in a molar ratio of larger than 3.

8. The sealing material according to any one of claims 1 to 7, which is noncrystalline.

9. The sealing material according to any one of claims 1 to 8, which is substantially free of PbO.

10. The sealing material according to any one of claims 1 to 9, which has a softening point of 570°C or lower.

11. The sealing material according to any one of claims 1 to 10, which is used for sealing a material having a thermal expansion coefficient of 30 to 65×10⁻⁷/°C.

12. The sealing material according to any one of claims 1 to 11, which is used for sealing a lamp.

13. A sealing tablet, comprising a sealing material sintered into a predetermined shape,
wherein the sealing material is the sealing material according to any one of claims 1 to 12.

14. A glass composition for sealing comprising, as a glass composition, in terms of mass%, 60 to less than 77% of Bi₂O₃, 5 to 20% of B₂O₃, 3 to 15% of ZnO, and 1 to 7% of SiO₂ provided that 1% is excluded, and having a thermal expansion coefficient in a temperature range of 30 to 300°C of 100×10⁻⁷/°C or less.

15. The glass composition for sealing according to claims 14, wherein:
the glass composition further comprises 1 to 10 mass% of BaO as a glass composition; and
the glass composition has a value of ZnO/BaO in a molar ratio of larger than 3.

16. A glass composition for sealing comprising:
the glass composition comprises, as a glass composition, in terms of mass%, 60 to less than 77% of Bi₂O₃, 6 to 15% of B₂O₃, 5 to 15% of ZnO, 1 to 9% of BaO, 0 to 5% of CuO, 0 to 2% of Fe₂O₃, 1 to 5% of SiO₂ provided that 1% is excluded, and 0 to 7% of Al₂O₃; and
the glass composition has a value of ZnO/BaO in a molar ratio of larger than 3.

17. The glass composition for sealing according to any one of claims 14 to 16, comprising 1 to 7 mass% of Al₂O₃ as a glass composition.

18. The glass composition for sealing according to any one of claims 14 to 17, which is noncrystalline.

19. The glass composition for sealing according to any one of claims 14 to 18, which is substantially free of PbO.

20. The glass composition for sealing according to any one of claims 14 to 19, which is used for sealing a lamp.
